# FASCICULE DE BREVET EUROPEEN

(11) **EP 0 745 532 B1**
(45) Date de publication et mention de la délivrance du brevet: **27.03.2002**
(21) Numéro de dépôt: 96401167.0
(22) Date de dépôt: 31.05.1996
(51) Int. Cl.: B64D 11/06

(54) **Profilé destiné à l'assemblage des éléments de structure d'un siège tel qu'un siège d'aéronef et procédé d'assemblage utilisant ce profilé**
Profilstäbe zum Zusammenbau eines Stuhlgerüstes, etwa eines Flugzeugsitzes und Verfahren für den Zusammenbau unter Benutzung dieser Profilstäbe
A profile design for the assembly of a seating structure, specially an aircraft seat , and assembly process using this profile

(30) Priorité: 31.05.1995 FR 9506483
(43) Date de publication de la demande: 04.12.1996
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Bedouch, Pierre-François, 36100 Issoudun (FR)
(74) Mandataire: Derambure, Christian

(56) Documents cités:
- EP-A- 0 042 565
- EP-A- 0 470 036
- WO-A-94/23996
- US-A- 3 785 600

## Description

L'invention concerne un profilé spécialement destiné à l'assemblage des éléments de structure d'un siège tel qu'un siège d'aéronef, et une structure de siège incluant un tel profilé.

Les structures de siège d'aéronef actuellement connus comprennent un ou plusieurs éléments de pied avant, un ou plusieurs éléments de pied arrière et un élément d'assise, assemblé rigidement aux éléments de pied grâce à deux profilés disposés transversalement par rapport au siège, placés horizontalement lorsque le siège est dans sa position normale d'utilisation. Ces profilés ont une forme de tube cylindrique ainsi que cela est illustré par les documents EP-A-53 012, EP-A-286 471, EP-A-495 318, EP-A-496 658, US-A-3 145 051, US-A-4 718 719, US-A-5 152 578 et GB-A-2 232 584.

L' EP-A-0 042 565 décrit en particulier un profilé conforme au préambule de la revendication 1.

les réalisations conformes à l'état de la technique impliquent de nombreuses pièces, généralement toutes différentes les unes des autres, nécessitant donc des outillages spécifiques et impliquant un processus de montage long, complexe et coûteux. Elles ont aussi pour inconvénients que le poids de la structure de siège - donc le siège lui-même - est élevé. La multiplicité des pièces entraîne un coût élevé notamment de stockage, de maintenance, etc.

L'invention a donc pour but de surmonter les inconvénients des structures de sièges actuelles, et plus particulièrement d'en diminuer le prix de revient, d'en diminuer le poids, de faciliter et d'optimiser le processus de fabrication. Ces objectifs supposent naturellement, par ailleurs, que les performances requises notamment à l'écrasement soient assurées. L'invention a donc également pour objectif de proposer une structure de siège d'aéronef qui soit particulièrement bien adaptée à la grande série. A cet égard, la structure de siège objet de l'invention autorise une indépendance d'ancrage de l'élément d'assise de la structure par rapport au pied avant et au pied arrière, en sens transversal.

A cet effet l'invention propose un profilé spécialement destiné à l'assemblage rigide, par coulissement axial et serrage mécanique, des éléments de structure d'un siège, plus spécialement d'aéronef presentant, les caractéristiques de la revendication 1.

D'autres caractéristiques du profilé sont énoncées dans les revendications 1 à 12.

L'invention propose aussi une structure de siège, conforme à la revendication 13.

D'autres caractéristiques de cette structure sont énoncées dans les revendications 13 à 37.

L'aménage des éléments de structure assemblés peut être réglé de façon continue et indépendamment pour chaque élément de structure. Bien que rapide et apte à assurer une résistance suffisante à l'écrasement, les profilés d'assemblage mis en oeuvre présentent également une capacité d'auto-alignement tenant compte des éventuelles déformations du plancher de l'aéronef auquel est ancré le siège.

Les autres caractéristiques de l'invention résulteront de la description qui suivra en référence aux dessins annexés dans lesquels :
- la figure 1 est une vue schématique en coupe par un plan transversal illustrant un profilé d'assemblage selon l'invention en H ;
- la figure 2 est une vue schématique en coupe par un plan transversal illustrant un profilé d'assemblage selon l'invention en pseudo H ;
- la figure 3 est une vue schématique en coupe par un plan transversal illustrant un profilé d'assemblage selon l'invention en forme générale rectangulaire, selon une première variante ;
- la figure 4 est une vue schématique en coupe par un plan transversal illustrant un profilé d'assemblage selon l'invention en forme générale pseudo rectangulaire, selon une deuxième variante ;
- la figure 5 est une vue schématique en coupe par un plan transversal illustrant, de façon partielle, une structure de siège d'avion conforme à l'invention ;
- la figure 6 est une vue illustrant l'assemblage de deux éléments de structure du siège d'avion de la figure 5, à savoir : le pied arrière et l'élément d'assise.
- la figure 7 est une vue schématique en coupe illustrant une variante de réalisation de l'élément d'assise de la structure de siège ;
- la figure 8 est une vue schématique en coupe similaire à la figure 5, illustrant la mise en oeuvre du profilé selon la figure 4.

L'invention s'applique plus spécialement aux sièges d'aéronef.

La structure 1 d'un tel siège comprend notamment un ou plusieurs éléments de pied avant 2, un ou plusieurs éléments de pied arrière 3, et un élément d'assise 4.

L'élément d'assise 4 est assemblé rigidement aux éléments de pied avant 2 et arrière 3 au moyen de deux profilés d'assemblage 5 formant poutres, qui, dans la réalisation considérée, sont identiques entre eux. Dans une autre réalisation, non représentée, les deux profilés d'assemblage utilisés seraient, sans être strictement identiques entre eux, du moins semblables.

Les profilés 5 peuvent non seulement remplir leur fonction d'assemblage mais aussi de poutre de rigidification.

La structure 1 comporte également une ou plusieurs contre-fiches 6, traverses de liaison 7 et profilés gabarit de bagage 8. Par ailleurs, l'élément d'assise 4 est prolongé, vers l'arrière et vers le haut, par un élément de dossier 9.

Bien que l'invention soit décrite en relation avec l'assemblage de l'élément d'assise 4 et des éléments de pied avant 2 et arrière 3, elle peut être étendue à d'autres assemblages concernant la structure 1.

Les éléments 2, 3, 4 ainsi que le profilé d'assemblage 5 sont réalisés en métal, notamment en alliage d'aluminium.

La forme de ces éléments 2, 3, 4 et profilé 5 est déterminée en fonction des différentes caractéristiques qu'ils doivent présenter, notamment de taille, de poids, de forme, de rigidité, etc.

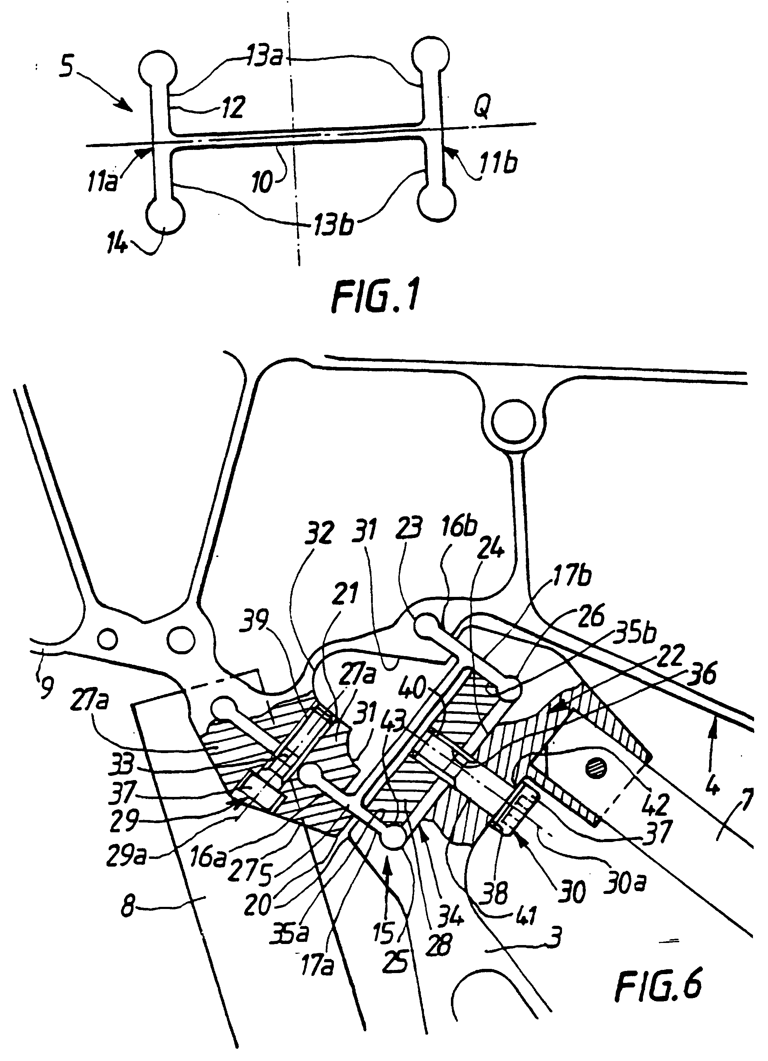

On décrit maintenant, plus spécialement en référence à la figure 1, le profilé 5.

Ce profilé est spécialement destiné à l'assemblage rigide par coulissement axial et serrage mécanique des éléments de structure 2, 3, 4.

Le profilé 5 présente en section transversale (correspondant au plan de la figure 1), une forme générale de H. Dans cette réalisation, le profilé 5 est donc ouvert.

Celle-ci comporte donc une âme centrale 10 et deux paires d'ailes 11a, 11b.

L'âme centrale 10 permet de définir un plan transversal médian P, et un plan longitudinal médian Q.

Les plans P et Q sont perpendiculaires l'un à l'autre.

On désigne par la référence 12 une aile quelconque de la paire d'ailes 11a, 11b.

Les différentes ailes 12 sont généralement analogues entre elles.

Les deux paires d'ailes 11a, 11b sont écartées l'une de l'autre. Les deux ailes 12 de chaque paire d'ailes 11a, 11b sont deux à deux opposées de part et d'autre de l'âme 10.

Les deux ailes 12, situées d'un même côté de l'âme 10 par rapport au plan Q, forment une couple d'ailes. Le profilé 5 comporte donc deux couples d'ailes 13a, 13b.

Le profilé d'assemblage 5 présente deux plans de symétrie, respectivement P et Q. Les quatre ailes 12 sont semblables entre elles et notamment identiques.

Chaque aile 12 s'étend de façon rectiligne et perpendiculairement, ou sensiblement perpendiculairement, par rapport à l'âme 10, à l'extrémité de celle-ci. Vers son bord libre opposé à l'âme 10, une aile comprend une saillie 14. Cette saillie 14 est dirigée au moins vers le plan P. Dans la réalisation représentée sur la figure 1, la saillie 14 est dirigée également à l'opposé du plan P.

Les ailes 12, avec leur saillie 14, ont pour fonction de participer au guidage à coulissement axial et au blocage des éléments de structure 2, 3, 4 ainsi que cela est décrit par la suite.

D'une façon générale, une saillie 14 est inscrite dans une enveloppe de contour circulaire.

Dans la réalisation représentée sur la figure 1, la saillie 14 a une face extérieure en forme de secteur circulaire s'étendant sur un angle de l'ordre de 300°. Toutefois, l'ouverture du secteur circulaire peut être différente et être comprise entre 280° et 340°, et notamment entre 295° et 315°.

Dans la réalisation représentée sur la figure 1, les ailes 12 ont une épaisseur plus grande que celle de l'âme 10. Par exemple, de l'ordre de 50 % plus grande. Par ailleurs, l'encombrement maximal d'une saillie 14 est de l'ordre de deux fois l'épaisseur de l'aile 12, ou trois fois l'épaisseur de l'âme 10.

Préférentiellement, il est prévu un arrondi à la jonction entre chaque aile 12 et l'âme 10.

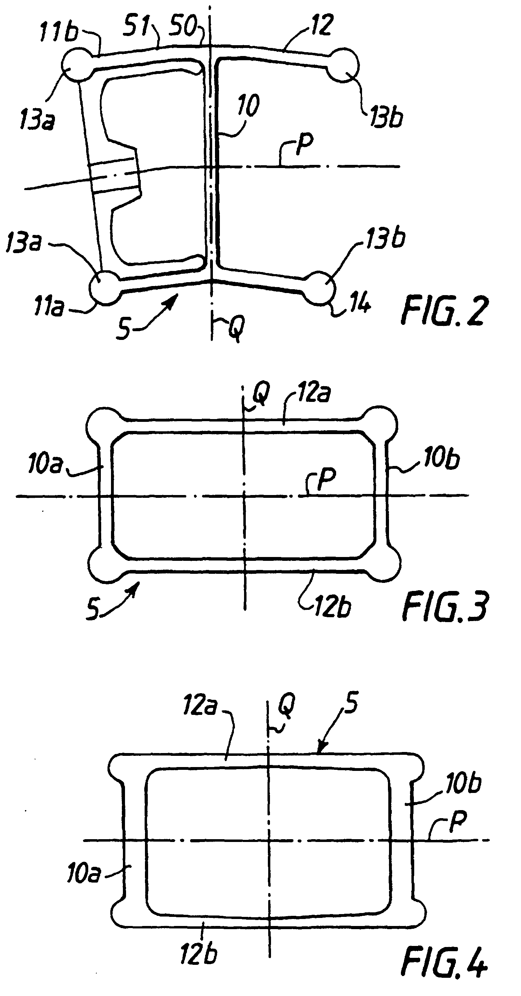

On se réfère maintenant à la figure 2 qui illustre une variante de réalisation du profilé 5 de la figure 1. Ce profilé est en forme de pseudo-H.

D'une façon générale, au moins une des ailes 12 présente une forme en au moins deux tronçons rectilignes légèrement inclinés l'un par rapport à l'autre.

Dans la réalisation représentée, les ailes de la paire d'ailes 11a s'étendent de façon rectiligne, tandis que chacune des ailes de la paire d'ailes 11b présente une forme en deux tronçons 50, 51 rectilignes légèrement inclinés l'un par rapport à l'autre de quelques degrés, la jonction entre les deux tronçons étant au voisinage de l'âme 10, c'est-à-dire du plan Q. Le tronçon 50 attenant à l'âme 10, de courte longueur est perpendiculaire à l'âme 10. Le tronçon 51, de plus grande longueur que le tronçon 50 est parallèle aux ailes de la paire 11a. Cette dernière paire d'ailes est dirigée vers l'extérieur du profilé 5, l'angle par rapport à la normale à l'âme 10 étant de quelques degrés, notamment inférieur à 10°. Par ailleurs, dans cette réalisation chaque aile de la paire 11b a une longueur légèrement supérieure à celle de l'aile de la paire 11a.

On se réfère maintenant à la figure 3 qui illustre une variante de réalisation du profilé 5 dans laquelle ce dernier a, en section droite transversale une forme générale tubulaire fermée à savoir rectangulaire. Le profilé 5 a alors deux âmes 10a, 10b généralement analogues entre elles, parallèles l'une à l'autre, écartées l'une de l'autre, rectilignes. Le profilé 5 a, par ailleurs, une paire d'ailes 12a, 12b généralement analogues entre elles, écartées l'une de l'autre, parallèles l'une à l'autre, rectilignes, rejoignant les extrémités des deux âmes 10a, 10b où se trouvent des saillies 14.

On se réfère maintenant à la figure 4 qui illustre une variante de réalisation du profilé de la figure 3. Les âmes 10a, 10b sont d'épaisseurs élargies. Les ailes 12a, 12b sont de plus faible épaisseur vers le plan Q et de plus forte épaisseur vers les âmes 10a, 10b. Enfin, les saillies 14 s'étendent essentiellement dans la direction perpendiculaire au plan Q.

Des profilés 5 tubulaires tels que décrits ont pour avantage d'avoir des moments d'inertie et d'une résistance à la torsion en principe meilleurs que pour un profilé ouvert tel que décrit précédemment.

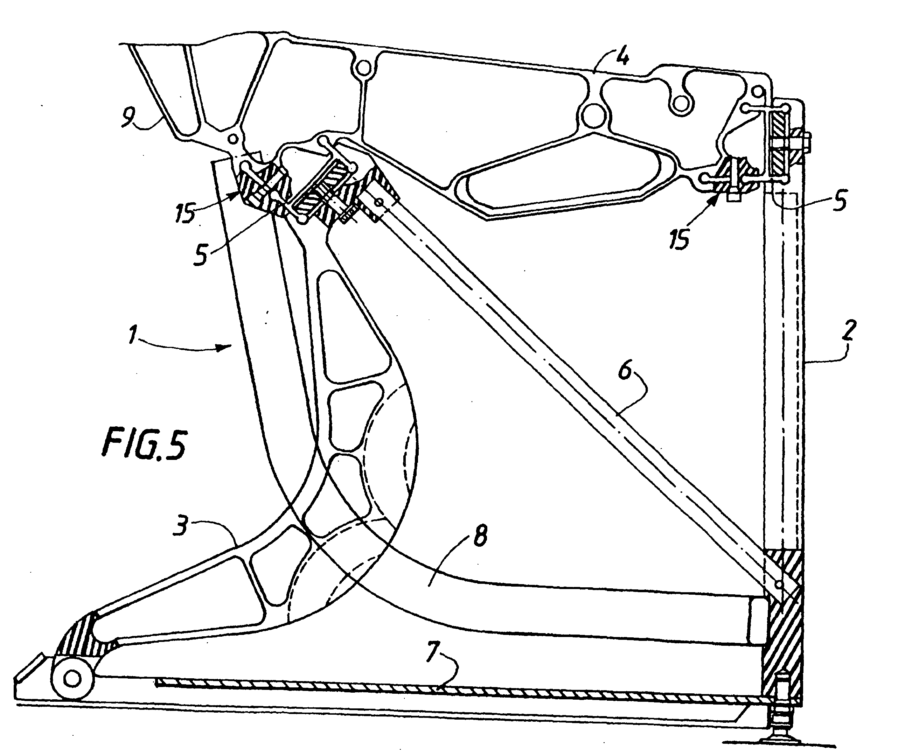

Un élément de structure 2, 3, 4 comporte au moins un moyen d'assemblage 15 avec au moins un profilé d'assemblage 5 disposé transversalement (figure 5).

Le moyen d'assemblage 15 a une forme complémentaire de celle du profilé 5.

L'élément de pied avant 2 comporte un tel moyen d'assemblage 15 vers sa partie extrême libre supérieure. Il en est de même pour l'élément de pied arrière 3.

Quant à l'élément d'assise 4, il comporte deux moyens d'assemblage 15 pour respectivement, l'élément de pied avant 2 et l'élément de pied arrière 3. L'un de ces deux moyens d'assemblage 15 est situé vers l'extrémité libre antérieure de l'élément d'assise 4 tandis que l'autre est situé vers son extrémité libre postérieure à partir de laquelle s'étend l'élément de dossier 9.

Un moyen d'assemblage 15 inclut deux logements tels que 16a, 16b ou enfoncements tels que 17a, 17b.

Il inclut également des moyens de serrage tels que 21, 22 respectivement.

Les deux logements 16a, 16b ou enfoncements 17a, 17b sont généralement analogues entre eux. Ils s'étendent transversalement par rapport à l'élément de structure 2, 3, 4. Cela signifie que l'élément de structure 2, 3, 4 s'étendant dans une direction générale du plan de la figure 2, le logement ou enfoncement 16a, 16b, 17a, 17b s'étend perpendiculairement au plan de ladite figure.

Les deux logements 16a, 16b ou enfoncements 17a, 17b des moyens d'assemblage 15 sont disposés sensiblement parallèlement l'un à l'autre et en regard l'un de l'autre, et ce, à partir d'une face libre 20 de l'élément de structure 2, 3, 4 dans laquelle ils débouchent.

Ces deux logements 16a, 16b ou enfoncements 17a, 17b ont pour fonction de recevoir, par coulissement axial, deux ailes 12 en regard d'une couple d'ailes 13a, 13b d'un profilé d'assemblage 5. Les ailes 12 sont serrées mécaniquement contre les faces des logements 16a, 16b ou enfoncements 17a, 17b grâce à des moyens de serrage 21, 22.

Un logements 16a, 16b est caractérisé par le fait qu'il est limité par deux faces en regard et, en l'occurrence, parallèle l'une à l'autre en étant séparée l'une de l'autre par un espace vide débouchant sur la face 20 et formant, à l'opposé, un fond 23.

Un enfoncement 17a, 17b est caractérisé par la présence d'une seule face, et non de deux, cette face étant située en regard d'une partie échancrée 24. Cette face atteint d'un côté la face libre 20 de l'élément et, de l'autre côté, forme un fond 25.

Le fond 23, 25 du logement 16a, 16b ou de l'enfoncement 17a, 17b comporte un renflement 26. La saillie 14 et le renflement 26 sont destinés à coopérer l'un avec l'autre. Il ont, à cet effet, des formes complémentaires. Ainsi, un renflement 26 s'inscrit dans une enveloppe de contour circulaire, et en particulier, à une forme de secteur circulaire, dont l'angle est compris entre 100° et 340°.

Lorsque l'élément de structure 2, 3, 4 comprend deux logements 16a, 16b, le renflement 26 de chacun de ces deux logements est dirigé vers le logement en regard, ainsi qu'à l'opposé de celui-ci.

Lorsque l'élément de structure comprend deux enfoncements 17a, 17b, le renflement 26 de chacun d'entre eux est dirigé à l'opposé de l'autre enfoncement en regard.

Comme pour l'aile 12, un logement 16a, 16b ou enfoncement 17a, 17b s'étend de façon rectiligne et sensiblement perpendiculairement à la face libre 20 où il débouche. De plus, deux logements 16a, 16b ou enfoncements 17a, 17b, pourvus des renflements 26, sont semblables entre eux, notamment identiques.

Les moyens de serrage 21, 22 comprennent une pièce 27, 28 ayant au moins une face d'appui sur au moins une aile 12 du profilé d'assemblage 5, ainsi qu'une vis de serrage 29, 30, d'axe 29a, 30a. La vis de serrage 29, 30 est apte à assurer le serrage de la pièce 27, 28 contre l'aile 12 correspondante du profilé 5, et contre le logement 16a, 16b ou l'enfoncement 17a, 17b de l'élément de structure 2, 3, 4.

On considère maintenant, plus particulièrement, l'élément d'assise 4, lequel comporte deux moyens d'assemblage 15 identiques entre eux.

Chacun de ces deux moyens d'assemblage 15 est du type comprenant deux logements 16a, 16b. Ceux-ci sont ménagés dans deux parties saillantes 31 de l'élément de structure 4 séparées l'une de l'autre par une partie échancrée intermédiaire 32.

Dans ce cas, la pièce 27 fait partie intégrante de l'élément de structure 4. Plus précisément, la pièce 27 forme une partie du logement 16a et une partie de la partie saillante 31 dans laquelle il est ménagé. Le logement 16a est alors prolongé vers l'intérieur de l'élément de structure 4 et au-delà de son renflement 26 par une gorge 33 suffisamment allongée pour donner l'élasticité nécessaire au serrage de la pièce 27, au moyen de la vis 29 dont l'axe 29a est sensiblement perpendiculaire au logement 16a, 16b.

On se réfère maintenant plus spécialement à la deuxième variante de réalisation correspondant aux éléments de pied 2, 3. Chaque élément de structure 2, 3 comporte alors un moyen d'assemblage 15 du type ayant deux enfoncements 17a, 17b ménagés sur les deux faces en regard, limitant de part et d'autre une partie échancrée intermédiaire 24. Celle-ci a, en section droite transversale une forme générale de pseudo U ayant une âme 34 et deux ailes correspondant aux deux enfoncements 17a, 17b. Les angles, entre l'âme 34 et les deux ailes formant 17a, 17b, forment les renflements 26.

La pièce 28 est alors distincte de l'élément de structure 2, 3. Elle comporte deux surfaces d'appui 35a, 35b, opposées l'une à l'autre. La pièce 28 est destinée à coopérer avec la partie échancrée en U 24.

La vis de serrage 30 a alors son axe 30a sensiblement parallèle aux enfoncements 17a, 17b et sensiblement perpendiculaire à l'âme 34.

Chacune des vis 29, 30 comporte un filetage 36 et une tête de serrage 37 formant un épaulement 38.

Dans la première variante de réalisation, la pièce 27 comporte un orifice 39 permettant le passage de la vis 29. La pièce 27 comporte également un épaulement pour l'épaulement 38 de la vis 29. La partie 27a de l'élément de structure 4 faisant partie de la partie saillante 31, située de l'autre côté du logement 16a, est pourvue d'un taraudage coopérant avec le filetage 36.

On observera que, s'agissant de la première variante de réalisation, il est prévu des moyens de serrage 21 seulement pour le logement 16a et l'aile 12 correspondante. Aucun moyen de serrage n'est nécessaire pour le logement 16b. Néanmoins, un tel moyen de serrage peut être envisagé. On notera également que la vis 29 est située à proximité immédiate du renflement 26, afin d'avoir le couple de serrage maximal.

S'agissant de la seconde variante de réalisation, la pièce 28 se présente sous la forme d'un élément profilé à section carrée ou rectangulaire pourvu d'un trou taraudé 40 avec lequel coopère le filetage 36 de la vis de serrage 30, laquelle traverse un orifice 41 prévu dans l'élément de structure, un épaulement 42 étant prévu pour coopérer avec l'épaulement correspondant 38 de la tête 37.

Alors que, dans la première variante de réalisation, le serrage 5, immobilisant l'élément de structure 4 contre le profilé 5, assure l'application contre les deux faces opposées respectivement intérieure et extérieure d'une même aile 12, le blocage est assuré, dans la seconde forme de réalisation, par les deux surfaces d'appui 35a, 35b de la pièce 28 venant contre les deux parois internes des deux ailes 12, et contre les deux renflements 26.

A cet effet, il est prévu que la pièce 28 comporte deux angles cassés 43 susceptibles d'épouser la forme des renflements 26.

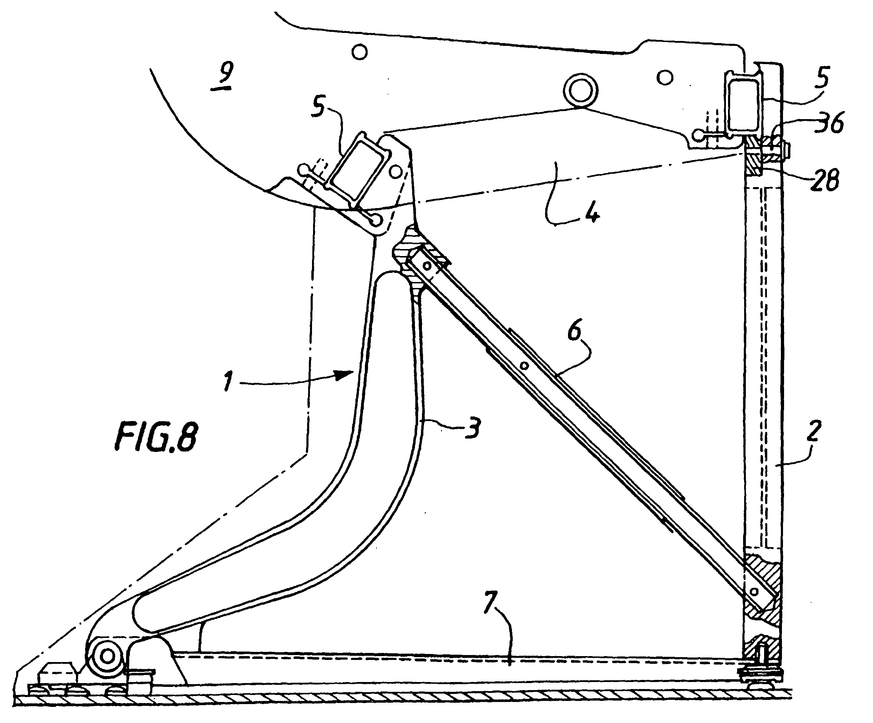

On se réfère maintenant plus spécialement à la figure 8 qui illustre une variante de réalisation dans laquelle on met en oeuvre des profilés tels que ceux de la figure 4. Dans cette réalisation, les moyens d'assemblage 15 sont tous de type à enfoncements étant donné la forme du profilé 5 mis en oeuvre.

Toutefois, cette forme de réalisation à enfoncements est combinée avec la réalisation des moyens de serrage tels que décrits précédemment en relation avec la forme de réalisation à logements (gorge 33, vis 29, etc).

S'agissant du pied avant, il est alors prévu, comme moyens de serrage une pièce ayant une fonction similaire à celle de la pièce 28 déjà décrite. Toutefois, cette pièce est alors placée à l'extérieur du profilé 5, l'intérieur étant inaccessible.

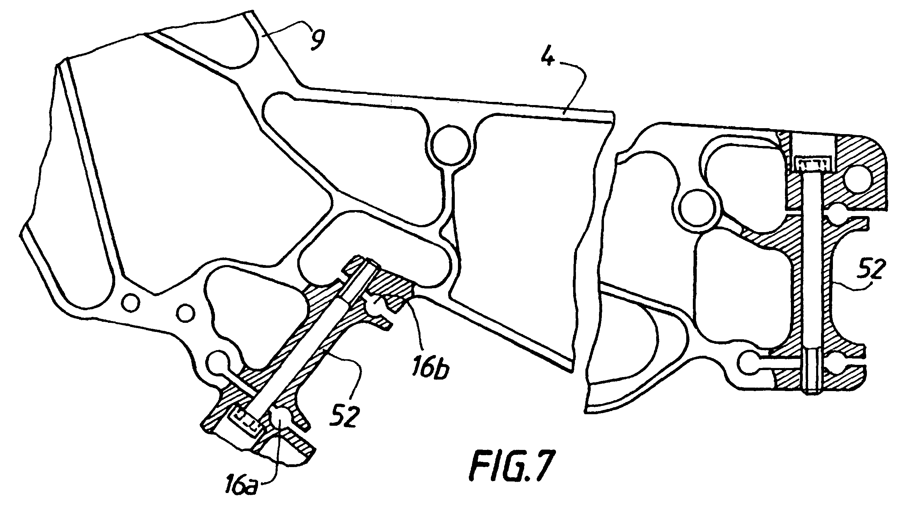

On se réfère maintenant plus spécialement à la figure 7 qui, par rapport à la réalisation de la figure 6, diffère par le fait que les deux logements 16a, 16b, au lieu d'être séparés l'un de l'autre par une profonde partie échancrée telle que 32 sont reliés l'un à l'autre par une partie 52 dans laquelle s'étend le trou taraudé de serrage de la vis 29, lequel trou taraudé passe à l'arrière du logement ou même à travers le logement opposé à celui où se trouve la tête 37 de la vis 29. Dans ce dernier cas, la gorge 33 est placée à l'opposé de la tête 37.

Les éléments 2, 3, 4 tels que décrits avec les moyens d'assemblage 15 comprenant des logements 16a,16b ou enfoncements 17a, 17b et des moyens de serrage 21, 22 peuvent être assemblés l'un à l'autre de façon rigide, au moyen d'un profilé d'assemblage 5. Et cela dans les différentes réalisations considérées.

A cet effet et en référence par exemple au mode de réalisation selon les figures 1, 5 et 6, une première couple d'ailes 13a du profilé d'assemblage 5 est assemblée dans les deux logements 16a, 16b ou enfoncements 17a, 17b d'un des éléments de structure 4, tandis que l'autre couple d'ailes 13b est assemblée dans les deux enfoncements 17a, 17b ou logements 16a, 16b d'un second élément de structure 2, 3.

Dans l'assemblage ainsi réalisé, les deux faces libres 20 des deux éléments de structure assemblés, dans lesquels sont ménagés les logements 16a, 16b ou enfoncements 17a, 17b, sont situées à proximité immédiate l'une de l'autre tout en étant espacées l'une de l'autre.

Dans la réalisation représentée sur les dessins, un élément de structure 4, selon la première variante de réalisation, est assemblé au moyen d'un profilé d'assemblage 5 à un élément de structure 2, 3 selon la seconde variante. Toutefois, l'invention serait applicable dans le cas où seraient assemblés des éléments de structure de même variante -première ou seconde.

Dans la réalisation représentée sur les dessins, les deux axes 29a, 30a des vis de serrage 29, 30 de l'assemblage sont sensiblement perpendiculaires entre eux.

Des structures d'assemblage analogues découlent de la mise en oeuvre des autres modes de réalisation des profilés 5.

Le procédé d'assemblage d'une structure 1 telle qu'elle vient d'être décrite, consiste à faire coopérer les ailes 12, 12a, 12b des profilés d'assemblage 5 avec les logements 16a, 16b ou enfoncements 17a, 17b, et ce, par coulissement axial, les vis de serrage 29, 30 étant alors dévissées.

Une fois le positionnement souhaité atteint, on peut visser les vis de serrage 29, 30 pour assurer le serrage, et donc l'immobilisation.

On comprend de la description qui précède que le positionnement peut être réglé de façon continue et indépendamment pour les différents éléments de structure.

## Revendications

1. Profilé spécialement destiné à l'assemblage rigide, par coulissement axial et serrage mécanique des éléments de structure (2, 3, 4) d'un siège, plus spécialement d'aéronef, présentant en section droite transversale une forme générale de H comportant au moins une âme centrale (10) et deux paires (11a, 11b) d'ailes (12), les ailes (12) de chaque paire d'ailes (11a, 11b) étant opposées par rapport au plan longitudinal médian Q de l'âme centrale (10), les ailes (12) s'étendant à l'extrémité de l'âme centrale (10) dans une direction générale sensiblement perpendiculaire à l'âme centrale (10), **caractérisé en ce que** chaque aile (12) présente à son extrémitd opposée à l'âme (10) au moins une saillie (14) dont la face extérieure présente une forme de secteur circulaire dirigée au moins en partie vers le plan transversal médian P de l'âme centrale (10), la saillie ayant pour fonction de participer au guidage à coulissement axial et au blocage de l'élément de structure.

2. Profilé selon la revendication 1, **caractérisé par le fait qu'**au moins une des ailes (12) s'étend de façon rectiligne.

3. Profilé selon l'une quelconque des revendications 1 et 2, **caractérisé en ce qu'**au moins une des ailes (12) présente une forme en au moins deux tronçons rectilignes légèrement inclinés par rapport à l'autre.

4. Profilé selon la revendication 3, **caractérisé en ce que** les deux tronçons sont inclinés l'un par rapport à l'autre de quelques degrés.

5. Profilé selon l'une quelconque des revendications 3 et 4, **caractérisé en ce que** la jonction entre les deux tronçons est située à proximité du plan Q et notamment de l'âme centrale (10).

6. Profilé selon l'une quelconque des revendications 1 à 5, **caractérisé par le fait qu'**une saillie (14) est dirigée également à l'opposé du plan transversal médian (P).

7. Profilé selon l'une quelconque des revendications 1 à 6, **caractérisé par le fait que** le secteur circulaire s'étend sur un angle compris entre 280° et 340°, et notamment entre 295° et 315°.

8. Profilé selon l'une quelconque des revendications 1 à 7, **caractérisé en ce que** l'aile (12) d'une paire d'ailes (11a,11b) est légèrement plus longue que celle opposée.

9. Profilé selon l'une quelconque des revendications 1 à 8, **caractérisé en ce qu'**il présente en section droite transversale une forme de pseudo **H**, les ailes (12) d'une première paire d'ailes (11a, 11b) étant rectilignes et légèrement inclinées par rapport à l'âme centrale tandis que les ailes (12) d'une seconde paire d'ailes (11a, 11b) sont en deux tronçons légèrement inclinés l'un par rapport à l'autre ; les ailes de la seconde paire étant légèrement plus longues que celles de la première paire.

10. Profilé selon l'une quelconque des revendications 1 à 7, **caractérisé par le fait que** les plans transversal médian (P) et longitudinal médian (Q) de l'âme (10) constituent deux plans de symétrie d'ensemble du profilé (5), les ailes (12) étant identiques.

11. Profilé spécialement destiné à l'assemblage rigide, par coulissement axial et serrage mécanique des éléments de structure (2, 3, 4) d'un siège, plus spécialement d'aéronef, présentant en section droite transversale une forme tubulaire fermée sensiblement rectangulaire comportant deux âmes (10a, 10b) généralement analogues entre elles et écartées l'une de l'autre et une paire d'ailes (12a, 12b), généralement analogues entre elles, écartées l'une de l'autre, rejoignant les extrémités des deux âmes (10a, 10b), les ailes (12a, 12b) s'étendant à l'extrémité des âmes (10a, 10b) dans une direction générale sensiblement perpendiculaire aux âmes (10a, 10b), **caractérisé en ce que** chaque aile (12a, 12b) présente à ses extrémités une saillie (14) dont la face extérieure présente une forme de secteur circulaire dirigée au moins en partie vers le plan transversal médian P des âmes (10a, 10b), la saillie ayant pour fonction de participer au guidage à coulissement axial et au blocage de l'élément de structure.

12. Profilé selon la revendication 11, **caractérisé par le fait que** les plans transversal médian (P) et longitudinal médian (Q) des âmes (10a, 10b) constituent deux plans de symétrie d'ensemble du profilé (5), les ailes (12a, 12b) étant identiques.

13. Structure d'un siège, comprenant des éléments d'assise et de dossier, la structure comportant un élément de structure (2, 3, 4) et un profilé selon l'une des revendications 1 à 12, **caractérisée en ce que** l'élément de structure comporte deux logements (16a, 16b) ou enfoncements (17a, 17b) généralement analogues entre eux, s'étendant transversalement suivant 1a direction définie par l'intersection des plans formés par les éléments d'assise et de dossier du siège, disposés sensiblement parallèlement et en regard l'un de l'autre à partir d'une face libre (20) de l'élément de structure (2, 3, 4) dans laquelle ils débouchent, ces deux logements (16a, 16b) ou enfoncements (17a, 17b) recevant, par coulissement axial, les ailes (12, 12a, 12b) du profilé d'assemblage (5), les ailes (12, 12a, 12b) étant serrées mécaniquement entre les faces des logements (16a, 16b) ou enfoncements (17a, 17b) grâce à des moyens de serrage (21, 22).

14. Structure selon la revendication 13, **caractérisée par le fait que** le fond (23, 25) d'un logement (16a, 16b) ou enfoncement (17a, 17b), opposé à la face (20) dans laquelle il débouche, comporte un renflement (26) avec lequel est destinée à coopérer une saillie (14) située vers le bord libre de l'aile (12, 12a, 12b) du profilé d'assemblage (5).

15. Structure selon la revendication 14, **caractérisée par le fait que** le renflement (26) d'un logement (16a, 16b) ou enfoncement (17a, 17b) est dirigé vers le logement (16a, 16b) ou enfoncement (17a, 17b) en regard et/ou à l'opposé.

16. Structure selon l'une quelconque des revendications 13 à 15, **caractérisée par le fait que** le logement (16a, 16b) ou enfoncement (17a, 17b) s'étend de façon sensiblement rectiligne, et sensiblement perpendiculairement à la face libre (20) où il débouche, de manière à correspondre à la forme du profilé (5).

17. Structure selon l'une quelconque des revendications 14 à 16, **caractérisée par le fait que** le renflement (26) est inscrit dans une enveloppe de contour circulaire.

18. Structure selon la revendication 17, **caractérisée par le fait que** le renflement (26) a une face en forme de secteur circulaire.

19. Structure selon la revendication 18, **caractérisée par le fait que** le secteur circulaire a un angle compris entre 100° et 340°.

20. Structure selon l'une quelconque des revendications 13 à 19, **caractérisée par le fait que** les deux logements (16a, 16b) ou enfoncements (17a, 17b) sont semblables entre eux.

21. Structure selon la revendication 13, **caractérisée par le fait que** deux logements (16a, 16b) sont ménagés dans deux parties saillantes (31) de l'élément de structure (4), séparées par une partie échancrée intermédiaire (32) ou reliées l'une à l'autre par une partie (52) dans laquelle s'étend le taraudé de moyens de serrage (21).

22. Structure selon la revendication 13, **caractérisée par le fait que** deux enfoncements (17a, 17b) sont ménagés dans les deux faces limitant de part et d'autre une partie échancrée intermédiaire (24).

23. Structure selon la revendication 22, **caractérisée par le fait que** la partie échancrée (24) a une forme générale de pseudo U dont les deux angles forment les renflements (26).

24. Structure selon la revendication 13, **caractérisée par le fait que** les moyens de serrage (21, 22) comprennent une pièce (27, 28) ayant au moins une surface d'appui sur au moins une aile (12, 12a, 12b) du profilé d'assemblage (5), ainsi qu'une vis de serrage (29, 30) de la pièce (27, 28) contre l'aile (12) correspondante du profilé d'assemblage (5) et contre le logement (16a, 16b) ou enfoncement (17a, 17b) de l'élément de structure.

25. Structure selon la revendication 24, **caractérisée par le fait que** la pièce (27) fait partie intégrante de l'élément de structure (4).

26. Structure selon la revendication 25, **caractérisée par le fait que** la pièce (27) forme une partie du logement (16a, 16b) de l'élément de structure (4).

27. Structure selon la revendication 26, **caractérisée par le fait qu'**un logement (16a, 16b) est prolongé vers l'intérieur de l'élément de structure (4) par une gorge (33) donnant l'élasticité nécessaire au serrage de la pièce (27).

28. Structure selon la revendication 27 , **caractérisée par le fait que** la pièce (28) est distincte de l'élément de structure (2, 3).

29. Structure selon la revendication **28, caractérisée par le fait que** la pièce (28) comporte deux surfaces d'appui (35a, 35b) notamment opposées l'une à l'autre.

30. Structure selon l'une quelconque des revendications 13 à 29, **caractérisée par le fait qu'**elle comporte deux logements (16a, 16b) et une pièce (27) faisant partie des moyens de serrage (21), faisant partie intégrante de l'élément de structure (4) et étant ménagés dans une partie saillante.

31. Structure selon la revendication **30**, **caractérisée par le fait que** la vis de serrage (29) a son axe (29a) sensiblement perpendiculaire aux logements (16a, 16b).

32. Structure selon l'une quelconque des revendications 13 à 29, **caractérisée par le fait qu'**elle comporte deux enfoncements (17a, 17b) ménagés dans une partie échancrée (24) dans laquelle peut coopérer une pièce rapportée (28) sur l'élément de structure (2, 3) faisant partie des moyens de serrage (22).

33. Structure selon la revendication 32, **caractérisée par le fait que** la vis de serrage (30) a son axe (30a) sensiblement parallèle aux enfoncements (17a, 17b).

34. Structure selon l'une quelconque des revendications 13 à 33, **caractérisée par le fait que** l'élément de structure constitue un élément de pied avant (2) ou un élément de pied arrière (3) pour un siège.

35. Structure selon l'une quelconque des revendications 13 à 33, **caractérisée par le fait que** l'élément de structure constitue un élément d'assise (4).

36. Structure selon la revendication 13, **caractérisée en ce qu'**elle comporte un ou plusieurs éléments de structure constituant un pied avant (2), un ou plusieurs éléments de structure constituant un pied arrière (3) et un élément de structure constituant une d'assise (4) assemblés entre eux au moyen de deux profilés d'assemblage (5).

37. Structure de siège selon la revendication 36, **caractérisée par le fait que** les deux profilés d'assemblage (5) sont identiques et parallèles l'un à l'autre.

## Claims

1. Profile especially intended for the rigid assembly, by axial sliding and mechanical clamping, of the structural elements (2, 3, 4) of a seat, more especially of an aircraft seat, having, in transverse cross-section, the general shape of an H with at least a central web (10) and two pairs (11a, 11b) of flanges (12), the flanges (12) of each pair of flanges (11a, 11b) being in opposite with regard to the median longitudinal plane (Q) of the central web (10), the flanges 12 extending at one end of the central web (10) in a direction generally perpendicular to the central web (10), **characterised in that** each flange (12) has at its end opposite to the web (10) at least a projection (14), the outer face of which having the shape of a sector of a circle directed at least partly towards the median transverse plane (P) of the central web (10) the projection having the function to participate in the axial sliding guidance and the locking of the structural element.

2. Profile according to claim 1, **characterised in that** at least one of the flanges (12) extends rectilinearly.

3. Profile according to either one of claims 1 and 2, **characterised in that** at least one of the flanges (12) has a shape configured as at least two rectilinear sections slightly inclined with respect to each other.

4. Profile according to claim 3, **characterised in that** the two sections are inclined with respect to each other by a few degrees.

5. Profile according to either one of claims 3 and 4, **characterised in that** the junction between two sections is situated in the vicinity of the plane Q and in particular of the central web (10).

6. Profile according to any one claims 1 to 5, **characterised in that** a projection (14) is also directed away from the median transverse plane (P).

7. Profile according to any one of claims 1 to 6, **characterised in that** the sector of a circle extends over an angle between 280° and 340°, and in particular between 295° and 315°.

8. Profile according to any one of claims of 1 to 7, **characterised in that** the flange (12) of a pair of flanges (11a, 11b) is slightly longer than that opposite.

9. Profile according to any one of claims 1 to 8, **characterised in that** it has, in transverse cross-section, the shape of a pseudo-H, the flanges (12) of a first pair of flanges (11a, 11b) being rectilinear and slightly inclined with respect to the central web, whereas the flanges (12) of a second pair of flanges (11a, 11b) are in two sections slightly inclined with respect to each other, the flanges of the second pair being slightly longer than those of the first pair.

10. Profile according to any one of the claims 1 to 7, **characterised in that** the median transverse plane (P) and the median longitudinal plane (Q) of the web (10) constitutes two general planes of symmetry of the profile (5), the webs (12) being identical.

11. Profile especially intended for the rigid assembly, by axial sliding and mechanical clamping of the structural elements (2, 3, 4) of a seat, more especially of an aircraft seat, having in general cross section a closed tubular shape generally rectangular having to webs (10a, 10b) generally analogous to each other and spaced apart from each other and a pair of flanges (12a, 12b) generally analogous to each other, spaced apart from each other and joining the ends of the two webs (10a, 10b) the flanges (12a, 12b) extending at the ends of the webs (10a, 10b) in a direction generally perpendicular to the webs (10a, 10b), **characterised in that** each flange (12a, 12b) has at its ends a projection (14), the outer face of which being in the shape of a sector of a circle directed at least partly towards the median transverse plane (P) of the webs (10a, 10b), the projection having the function to participate in the axial slinging guidance and the locking of the structural element.

12. Profile according to claim 11, **characterised in that** the median transverse plane (P) and the median longitudinal plane (Q) of the webs (10a, 10b) constitutes two general planes of symmetry of the profile (5), the webs (12a, 12b) being identical.

13. Structure of a seat comprising bottom and back elements, the structure comprising a structural element (2, 3, 4) and a police according one of the claims 1 to 12, **characterised in that** the structural element comprises two receptacles (16a, 16b) or recesses (17a, 17b) generally analogous to each other, extending transversely in the direction defined by the intersection of the planes formed by the bottom and back elements of the seat, arranged substantially parallel and facing each other from a free face (20) of the structural element (2, 3, 4), into which a free face they open receiving the flanges (12, 12a, 12b) of the assembly profile (5) by axial sliding, the flanges (12, 12a, 12b) being mechanically clamped between the faces of the receptacles (16a, 16b) or recesses (17a, 17b) by virtue of the clamping means (21, 22).

14. Structure according to claim 13, **characterised in that** the bottom (23, 25) of a receptacle (16a, 16b) or recess (17a, 17b) opposite the face (20) into which it opens, has a bulge (26) with which is intended to cooperate a projection (14) situated towards the free edge of the flange (12, 12a, 12b) of the assembly profile (5).

15. Structure according to claim 14, **characterised in that** the bulge (26) of a receptacle (16a, 16b) or recess (17a, 17b) is directed towards the facing receptacle (16a, 16b) or recess (17a, 17b) and/or away from it.

16. Structure according to any one of claims 13 to 15, **characterised in that** the receptacle (16a, 16b) or recess (17a, 17b) extends rectilinearly or substantially rectilinearly, and perpendicularly or substantially perpendicularly to the free face (20) where it opens, so as to correspond to the shape of the profile (5).

17. Structure according to either one of claims 14 to 16, **characterised in that** a bulge (26) is inscribed in an envelope of circular outline.

18. Structure according to claim 17, **characterised in that** the bulge (26) has a face in the shape of a sector of a circle.

19. Structure according to claim 18, **characterised in that** the sector of a circle has an angle between 100° and 340°.

20. Structure according to any one of claims 13 to 19, **characterised in that** the two receptacles (16a, 16b) or recesses (17a, 17b) are similar to each other and in particular identical.

21. Structure according to claim 13, **characterised in that** two receptacles (16a, 16b) are made in two projecting parts (31) of the structural element (4) separated by an intermediate indented part (32) or connected to each other by a part (52) in which there extends the internally threaded hole of clamping means (21).

22. Structure according to claim 13, **characterised in that** two recesses (17a, 17b) are made in the two faces limiting, on either side, an intermediate indented part (24).

23. Structure according to claim 22, **characterised in that** the indented part (24) has the general shape of a pseudo-U, the two angles of which form the bulges (26).

24. Structure according to claim 13, **characterised in that** the clamping means (21, 22) comprise a piece (27, 28) having at least one surface for bearing on at least one flange (12, 12a, 12b) of the assembly profile (5), as well as a screw (29, 30) for clamping the piece (27, 28) against the corresponding flange (12) of the assembly profile (5) and against the receptacle (16a, 16b) or recess (17a, 17b) of the structural element.

25. Structure according to claim 24, **characterised in that** the piece (27) forms an integral part of the structural element (4).

26. Structure according to claim 25, **characterised in that** the piece (27) forms a part of the receptacle (16a, 16b) of the structural element (4).

27. Structure according to claim 26, **characterised in that** a receptacle (16a, 16b) is extended towards the interior of the structural element (4) by a groove (33) giving the elasticity necessary for the clamping of the piece (27).

28. Structure according to claim 27, **characterised in that** the piece (28) is distinct from the structural element (2, 3).

29. Structure according to claim 28, **characterised in that** the piece (28) has two bearing surfaces (35a, 35b), in particular opposite each other.

30. Structure according to any one of claims 13 to 29, **characterised in that** it has two receptacles (16a, 16b) and a piece (27) forming part of the clamping means (21), forming an integral part of the structural element (4) and being made in a projecting part.

31. Structure according to claim 30, **characterised in that** the clamping screw (29) has its axis (29a) substantially perpendicular to the receptacles (16a, 16b).

32. Structure according to nay one of claims 13 to 29, **characterised in that** it has two recesses (17a, 17b) made in an indented part (24), in which indented part a piece (28) attached to the structural element (2, 3), forming part of the clamping means (22), is able to cooperate.

33. Structure according to claim 32, **characterised in that** the clamping screw (30) has its axis (30a) substantially parallel to the recesses (17a, 17b).

34. Structure according to any one of claims 13 to 33, **characterised in that** the structural element constitutes a front-leg element (2) or a rear-leg element (3) for a seat.

35. Structure according to any one of claims 13 to 33, **characterised in that** the structural element constitutes a bottom element (4).

36. Structure according to claim 13, **characterised in that** it has one or more structural elements constituting a front-leg (2), one or more structural elements constituting a rear-leg (3) and a structural element constituting a bottom (4) assembled with one another by means of two assembly profiles (5).

37. Seat structure according to claim 36, **characterised in that** the two assembly profiles (5) are identical and parallel to each other.

## Patentansprüche

1. Profil, durch axiales Einschieben und mechanisches Einklemmen insbesondere zur starren Verbindung der Elemente (2, 3, 4) eines Sitzgestells, insbesondere von Luftfahrzeugen, bestimmt, mit einem Querschnittsprofil in der Grundform eines H mit wenigstens einem zentralen Steg (10), und mit zwei Paaren (11a, 11b) von Schenkeln (12), die Schenkeln (12) jedes Schenkelpaares (11a, 11b) gegenüberliegend sind in bezug auf der längsverlaufenden Mittelebenen (Q) des zentralen Stegs (10), die Schenkel (12) sich, zu dem ende des zentralen Stegs (10), in einer generell senkrechten Richtung erstrecken, **dadurch gekennzeichnet, dass** jede Schenkel (12), zu ihrem Ende, die gegenüberliegen des stegs (10) ist, zumindest einen Ansatz (14) aufweist, der eine Aussenfläche in Form eines Kreisausschmitts hat, die Aussenfläche zumindest teilweise zur querverlaufenden Mittlebene (P) des zentralen Stegs (10) gerichtet ist, die Funktion des Ansatz ist es, der Führung beim axialen Einschieben und der starren Verbindung der Elemente des Gestells mitzuwirken.

2. Profil nach Anspruch 1, **dadurch gekennzeichnet, dass** sich wenigstens einer der Schenkel (12) geradlinig erstreckt.

3. Profil nach einem der Ansprüche 1 oder 2, **dadurch gekennzeichnet, dass** wenigstens einer der Schenkel (12) eine Form mit wenigstens zwei geradlinigen Abschnitten aufweist, die leicht zueinander geneigt sind.

4. Profil nach Anspruch 3, **dadurch gekennzeichnet, dass** die beiden Abschnitte um einige Grad zueinander geneigt sind.

5. Profil nach einem der Ansprüche 3 oder 4, **dadurch gekennzeichnet, dass** sich die Verbindungsstelle von zwei Abschnitten in der Nähe der Ebene Q und insbesondere des zentralen Stegs (10) befindet.

6. Profil nach einem der Ansprüche 1 bis 5, **dadurch gekennzeichnet, dass** ein Ansatz (14) auch entgegengesetzt zur querverlaufenden Mittelebene (P) gerichtet ist.

7. Profil nach einem der Ansprüche 1 bis 6, **dadurch gekennzeichnet, dass** der Kreisausschnitt einen Winkel zwischen 280° und 340°, insbesondere zwischen 295° und 315° aufweist.

8. Profil nach einem der Ansprüche 1 bis 7, **dadurch gekennzeichnet, dass** der Schenkel (12) eines Schenkelpaares (11a, 11b) geringfügig länger ist als der gegenüberliegende.

9. Profil nach einem der Ansprüche 1 bis 8, **dadurch gekennzeichnet, dass** es ein Querschnittsprofil in Form eines H hat, wobei die Schenkel (12) eines ersten Schenkelpaares (11a, 11b) geradlinig und in bezug auf einen sich in der Mitte befindenden leicht geneigt sind, während die Schenkel eines zweiten Schenkelpaares (11a, 11b) in zwei Abschnitten leicht zueinander geneigt sind; dabei sind die Schenkel des zweiten Paares geringfügig länger als die des ersten Paares.

10. Profil nach einem der Ansprüche 1 bis 7, **dadurch gekennzeichnet, dass** die querverlaufenden Mittelebenen (P) und die längsverlaufenden Mittelbenen (Q) des Stegs (10) zwei Symmetrieebenen des gesamten Profils (5) bilden, wobei die Schenkel (12) identisch sind.

11. Profil, durch axiales Einschieben und mechanisches Einklemmen insbesondere zur starren Verbindung der Elemente (2, 3, 4) eines Sitgestells, insbesondere von Luftfahrzeugen, bestimmt, mit einem Querschnittsprofil in der Grundform einer geschlossen rechteckig Röhrenform mit zwei in grossen und ganzen untereinander gleichen und voneinander beabstandeten stegen (10a, 10b), und mit einem Paar von im grossen und ganzen untereinander gleichen, voneinander beabstandeten Schenkeln (12a, 12b), die die Enden der beiden Stege (10a, 10b) miteinander verbinden, die Schenkel (12a, 12b) sich, zu der Ende der Stegen (10a, 10b), in einer generell senkrechten Richtung zu der Stegen (10a, 10b) erstrecken, **dadurch gekennzeichnet, dass** jede Schenkel (12a, 12b), zu ihrem Ende, einen Ansatz (14) aufweist, der eine Aussenfläche in Form eines kreisausschnitts hat, die Aussenfläche zumindest teilweise zur querlaufenden Mittelebene (P) der zentralen Stegen (10a, 10b) gerichtet ist die Funktion des Ansatz ist es, der Führung beim axialen Einschieben und der Starren Verbindung der Elemente des Gestells mitzuwirken.

12. Profil nach Anspruch 11, **dadurch gekennzeichnet, dass** die querverlaufenden Mittelebenen (P) und die längsverlaufenden Mittelebenen (Q) der Stegen (10a, 10b) zwei Symmetrieebenen des gesamten Profils (5) bilden, wobei die Schenkel (12) identisch sind.

13. Struktur eines Sitzes mit Sitzflächenauflageelementen und Rücklehneelementen, die Struktur einen Gestellelement (2, 3, 4) hat und einen Profil nach einem der Ansprüche 1 bis 12 hat, **dadurch gekennzeichnet, dass** der Gestellelement zwei im grossen und ganzen untereinander gleiche Aufnahmen (16a, 16b) bzw. Vertiefungen (17a, 17b) aufweist, die sich in Querrichtung, die sich definiert, als der Schnittpunkt der mit Sitzflächenauflageelementen und Rücklehneelementen bildenten Ebenen, erstrecken und von einer freien Fläche (20) des Gestellelements (2, 3, 4) ausgehend, in die sie einmünden, annähernd parallel und einander gegenüberliegend angeordnet sind, wobei diese beiden Aufnahmen (16a, 16b) bzw. Vertiefungen (17a, 17b) die Schenkel (12, 12a, 12b) eines Verbindungprofils (5) durch axiales Einschieben aufnehmen, die Schenkel (12, 12a, 12b) mit Hilfe von Klemm-Mitteln (21, 22) mechanisch zwischen den Flächen der Aufnahmen (16a, 16b) bzw. Vertiefungen (17a, 17b) eingeklemmnt werden.

14. Struktur nach Anspruch 13, **dadurch gekennzeichnet, dass** das Ende (23, 25) Aufnahme (16a, 16b) bzw. Vertiefung (17a, 17b), das der freien Fläche (20), in die sie einmündet, gegenüberliegt, eine Verstärkung (26) aufweist, die dazu bestimmt ist, mit einem Ansatz (14) zusammenzuwirken, der zum freien Rand des Schenkels (12, 12a, 12b) Verbindungsprofils (5) hin gelegen ist.

15. Struktur nach Anspruch 14, **dadurch gekennzeichnet, dass** die Verstärkung (26) einer Aufnahme (16a, 16b) bzw. Vertiefung (17a, 17b), hin zur gegenüberliegender und/oder auf der entgegengesetzten Seite liegenden Aufnahme (16a, 16b) bzw. Vertiefung (17a, 17b) gerichtet ist.

16. Struktur nach einem der Ansprüche 13 bis 15, **dadurch gekennzeichnet, dass** die Aufnahme (16a, 16b) bzw. Vertiefung (17a, 17b) sich geradlinig oder annähernd geradlinig und senkrecht oder annähernd senkrecht zur freien Fläche (20) erstreckt, in die sie einmündet, um so der Form des Profils (5) zu entsprechen.

17. Struktur nach einem der Ansprüche 14 bis 16, **dadurch gekennzeichnet, dass** eine Verstärkung (26) in eine Hüllkurve mit einer kreisförmigen Kontur einbeschrieben ist.

18. Struktur nach Anspruch 17, **dadurch gekennzeichnet, dass** die Verstärkung (26) eine Fläche in Form eines Kreisausschnitts aufweist.

19. Struktur nach Anspruch 18, **dadurch gekennzeichnet, dass** der Kreisausschnitt einen Winkel zwischen 100° und 340°aufweist.

20. Struktur nach einem der Ansprüche 13 bis 19, **dadurch gekennzeichnet, dass** die beiden Aufnahmen (16a, 16b) bzw. Vertiefungen (17a, 17b) untereinander gleich sind, insbesondere identisch sind.

21. Struktur nach Anspruch 13, **dadurch gekennzeichnet, dass** die beiden Aufnahmen (16a, 16b) in zwei vorstehenden Abschnitten (31) des Gestellelements (4) ausgebildet sind, die von einem eingebuchteten Zwischenabschnitt (32) getrennt bzw. durch einen Abschnitt (52), in den sich das Gewinde eines Klemm-Mittels (21) erstreckt, miteinander verbunden sind.

22. Struktur nach Anspruch 13, **dadurch gekennzeichnet, dass** die beiden Vertiefungen (17a, 17b) in den beiden Flächen ausgebildet sind, die einen eingebuchteten Zwischenabschnitt (24) beidseits begrenzen.

23. Gestellement nach Anspruch 22, **dadurch gekennzeichnet, dass** der eingebuchtete Abschnitt (24) eine Grundform annähernd wie ein U hat, dessen beide Schenkel die Verstärkungen (26) bilden.

24. Struktur nach Anspruch 13, **dadurch gekennzeichnet, dass** die Klemm-Mittel (21, 22) ein Teil (27, 28) umfassen, das wenigstens eine Auflagefläche an wenigstens einem Schenkel (12, 12a, 12b) des Verbindungsprofils (5) aufweist, wie auch eine Schraube (29, 30) zum Festklemmen des Teils (27, 28) am entsprechen Schenkel (12) des Verbindungsprofils (5) und in der Aufnahme (16a, 16b) bzw. Vertiefung (17a, 17b) des Gestellelements.

25. Struktur nach Anspruch 24, **dadurch gekennzeichnet, dass** das Teil (27) wesentlicher Bestandteil des Gestellelements (4) ist.

26. Struktur nach Anspruch 25, **dadurch gekennzeichnet, dass** das Teil (27) einen Teil der Aufnahme (16a, 16b) des Gestellelements (4) bildet.

27. Struktur nach Anspruch 26, **dadurch gekennzeichnet, dass** eine Aufnahme (16a, 16b) durch eine Vertiefung (33) ins Innere des Gestellelements (4) verlängert ist, die dem Teil (27) die notwendige Elastizität für das Einklemmen gibt.

28. Struktur nach Anspruch 27, **dadurch gekennzeichnet, dass** das Teil (28) vom Gestellelements (2, 3) getrennt ist.

29. Struktur nach Anspruch 28, **dadurch gekennzeichnet, dass** das Teil (28) zwei, insbesondere zwei sich gegenüberliegende Auflageflächen (35a, 35b) aufweist.

30. Struktur nach einem der Ansprüche 13 bis 29, **dadurch gekennzeichnet, dass** es zwei Aufnahmen (16a, 16b) und ein zu den Klemm-Mitteln (21) gehörendes Teil (27) aufweist, die ein wesentlicher Bestandteil des Gestellelements (4) und in einem vorspringenden Abschnitt vorgesehen sind.

31. Struktur nach Anspruch 30, **dadurch gekennzeichnet, dass** die Achse (29a) der Klemmschraube (29) annähernd senkrecht zu den Aufnahmen (16a, 16b) verläuft.

32. Struktur nach einem der Ansprüche 13 bis 29, **dadurch gekennzeichnet, dass** es zwei in einem eingebuchteten Abschnitt (24) vorgesehene Vertiefungen (17a, 17b) aufweist, in dem ein eingesetztes Teil (28), das zu den Klemm-Mitteln (22) gehört, mit dem Gestellelement (2, 3) zusammenwirken kann.

33. Struktur nach Anspruch 32, **dadurch gekennzeichnet, dass** die Achse (30a) der Klemmschraube (30) annähernd parallel zu den Vertiefungen (17a, 17b) verläuft.

34. Struktur nach einem der Ansprüche 13 bis 33, **dadurch gekennzeichnet, dass** das Gestellelement ein vorderes Fusselement (2) oder ein hinteres Fusselement (3) für einen Sitz bildet.

35. Struktur nach einem der Ansprüche 13 bis 33, **dadurch gekennzeichnet, dass** das Gestellelement ein Sitzflächenauflageelement (4) ist.

36. Struktur nach Anspruch 13, **dadurch gekennzeichnet, dass** es mit einem oder mehreren Gestellelementen, die vorderen Fuss bilden, einem oder mehreren Gestellelementen, die hinteren Fusse (3) bilden und einem Gestellelement, der Sitzflächenauflage (4) bildet, die mit Hilfe von zwei Verbindungsprofilen (5) untereinander verbunden sind.

37. Sitzgestell nach Anspruch 36,**dadurch gekennzeichnet, dass** die beiden Verbindungsprofile (5) identisch sind und parallel zueinander verlaufen.
